# EUROPEAN PATENT APPLICATION

(11) **EP 2 894 632 A1**
(43) Date of publication of application: **15.07.2015**
(21) Application number: 14181056.4
(22) Date of filing: 14.08.2014
(51) Int. Cl.: G10L 15/22, G06F 17/30, H04N 21/422, H04N 21/47

(54) **Display apparatus, interactive server and method for providing response information**

(30) Priority: 14.01.2014 KR 20140004623
(71) Applicant: Samsung Electronics Co., Ltd, Gyeonggi-do 443-742 (KR)
(72) Inventor: Son, Ji-hye, Incheon (KR); Kim, Do-wan, Gyeonggi-do (KR); Park, Sung-yun, Gyeonggi-do (KR)
(74) Representative: Appleyard Lees

(57) **Abstract**

A display apparatus (100) includes a display (120), a voice collector (140) configured to collect a user's voice, a communication interface (110) configured to provide the collected voice and the filtering information of the display apparatus to an interactive server (200), and a controller (150) configured to receive response information corresponding to the voice and to the filtering information from the interactive server, and to control the display to display the response information.

## Description

### BACKGROUND

### 1. Field

Methods and apparatuses consistent with exemplary embodiments relate to providing channel information, and more particularly, to filtering the channels and providing filtered channel information corresponding to a user's uttered voice from an interactive server.

### 2. Description of the Related Art

Voice recognition recognizes a content of a person's uttered voice by using a computer. In recent years, the voice recognition technology has been used in various display apparatuses to search for a television (TV) channel.

However, with the development of TV products and diversified broadcast contents, the amount of broadcasting through cable channels as well as through network broadcast has been increased. Various broadcast providers in different countries provide electronic programming guide (EPG) metadata. However, the metadata often does not correspond to actual programs broadcasted to a TV.

Channel filtering is used to resolve the above problems. In the related art, after a mapped result is transmitted to a client from a server, channel filtering is performed in a client, i.e., a display apparatus. However, this method slows down the speed because of the amounts of unfiltered data exchanged between the client and the server. In addition, because the amount of data transmitted from the server is limited, for example, if the number of search results is 1,000, only a portion of the search results is transmitted to the client, and the filtering is performed in the client on the portion of the search results. As a result, a substantially reduced number of channels is actually shown to a user.

### SUMMARY

Exemplary embodiments may address at least the above problems and/or disadvantages and other disadvantages not described above. The exemplary embodiments are not required to overcome the disadvantages described above, and may not overcome any of the problems described above.

One or more exemplary embodiments provide a display apparatus capable of providing filtered channel information corresponding to a user's uttered voice from an interactive server, an interactive server and a method for providing response information thereof.

According to an aspect of an exemplary embodiment, there is provided a display apparatus configured to display contents, a voice collector configured to collect a user's voice, a communication interface configured to provide the collected uttered voice and filtering information of the display apparatus to the interactive server, and a controller configured to, in response to receiving response information corresponding to the uttered voice and filtering information from the interactive server, control the display to display the response information.

The voice collector may convert the collected uttered voice signal to text information.

The filtering information may include at least one of a country code, a language code, a device model name, a firmware version, a current time of a device, a headend ID, an apparatus type, a conversation ID, and provided channel information of the display apparatus.

The communication interface may encrypt the uttered voice and the filtering information and provide the encrypted information to the interactive server.

The response information may include only information regarding a channel to be provided to the display apparatus.

The display may display channel information corresponding to the response information in a list.

The controller, in response to one of the displayed channel information being selected, may control the display to display a channel corresponding to the selected channel information.

According to an aspect of an exemplary embodiment, there is provided an interactive server which includes a communication interface configured to receive information corresponding to a user's uttered voice and filtering information from a display apparatus, an extractor configured to extract a search keyword from information corresponding to the received user's uttered voice, a searcher configured to search a channel based on pre-stored mapping information and the extracted keyword, a filter configured to filter the found channel based on the received filtering information and a controller configured to control the communication interface unit to transmit the filtered result to the display apparatus.

Information corresponding to the user's uttered voice may be text information and the extractor may extract entity information as a keyword from the text information.

The filter, by using the received filtering information, may filter a channel which is not watchable through the display apparatus.

According to an aspect of an exemplary embodiment, there is provided a method of providing response information of a display apparatus connected with an interactive server which includes collecting a user's uttered voice, providing the collected uttered voice and filtering information of the display apparatus to the interactive server, receiving response information corresponding to the uttered voice and filtering information, and displaying the received response information.

The collecting may convert the collected uttered voice signal to text information.

The filtering information may include at least one of a country code, a language code, a device model name, a firmware version, a current time of a device, a headend ID, a device type, a conversation ID, and provided channel information of the display apparatus.

The providing may encrypt the uttered voice and the filtering information and may provide the encrypted information to the interactive server.

The response information may include only information regarding a channel to be provided to the display apparatus.

The displaying may display channel information corresponding to the response information in a list.

The method of providing response information may further include selecting one of the displayed channel information and displaying a channel corresponding to the selected channel information.

According to an aspect of an exemplary embodiment, there is provided a method of providing response information of an interactive server connected with a display apparatus which includes receiving information corresponding to a user's uttered voice and filtering information from a display apparatus, extracting a search keyword from information corresponding to the received user's uttered voice, searching a channel based on pre-stored mapping information and the extracted keyword, filtering the found channel based on the received filtering information and transmitting the filtered result to the display apparatus.

Information corresponding to the user's utterance is text information and the extracting may extract entity information as a keyword from the text information.

The filtering, by using the received filtering information, may filter a channel which is not watchable through the display apparatus among the found channels.

According to an exemplary embodiment, there is provided a system comprising a display apparatus according to an exemplary embodiment and an interactive server according to an exemplary embodiment.

### BRIEF DESCRIPTION OF THE DRAWINGS

The above and/or other aspects will become more apparent by describing certain exemplary embodiments with reference to the accompanying drawings, in which:
FIG. 1 is a block diagram illustrating a configuration of an interactive system according to an exemplary embodiment;
FIG. 2 is a diagram illustrating an operation of providing response information which is appropriate to a user's uttered voice according to an exemplary embodiment;
FIG. 3 is a diagram illustrating a detailed configuration of a display apparatus according to an exemplary embodiment;
FIG. 4 is a diagram illustrating a detailed configuration of an interactive server according to an exemplary embodiment;
FIG. 5 is a diagram illustrating an example of a transmission packet;
FIG. 6 is a diagram illustrating an example of a simple format of a pre-stored channel map;
FIG. 7 is a diagram illustrating an example of a channel map;
FIG. 8 is a diagram illustrating an example of a user's interface window which may be displayed through a display apparatus;
FIG. 9 is a diagram illustrating an example of a user's interface window which may be displayed through a display apparatus;
FIG. 10 is a diagram illustrating an example of a user's interface window which may be displayed through a display apparatus;
FIG. 11 is a diagram illustrating an example of a response packet;
FIG. 12 is a flowchart describing a method of providing response information from a display apparatus according to an exemplary embodiment; and
FIG. 13 is a flowchart describing a method of providing response information from an interactive server according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

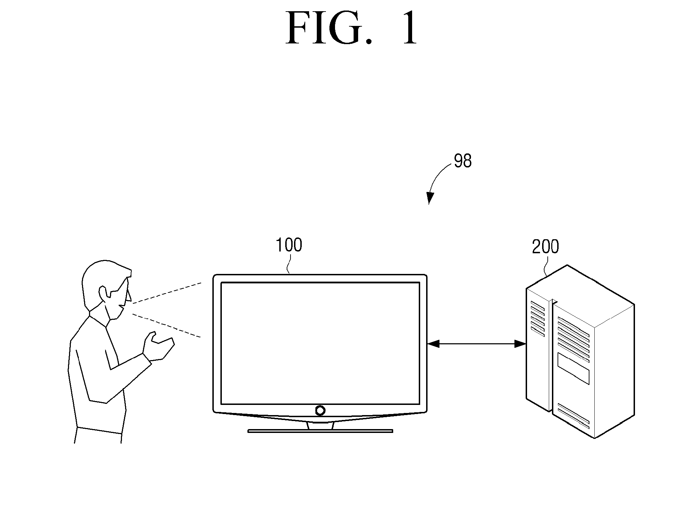

FIG. 1 is a block diagram illustrating a configuration of an interactive system according to an exemplary embodiment.

Referring to FIG. 1, an interactive system 98 includes a display apparatus 100 and an interactive server 200.

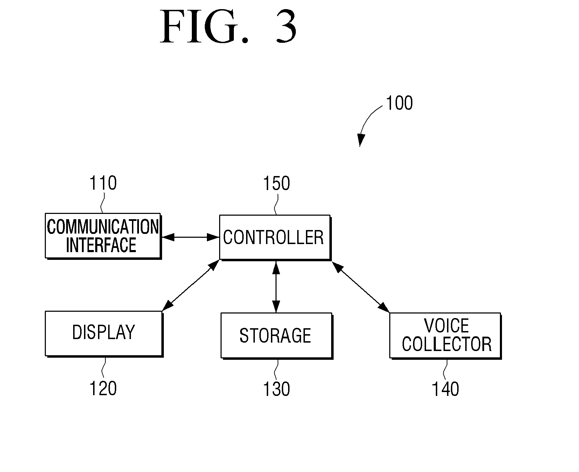

The display apparatus 100, when a user's uttered voice is input, performs an operation corresponding to an input user's uttered voice. The display apparatus 100, when the uttered voice is input from a user, transmits the input uttered voice and filtering information to the interactive server 200. The information may be provided to the interactive server 200 directly, and/or may be stored transitorily in an apparatus such as a memory. The display apparatus 100 may receive response information corresponding to the provided information, and may display the received response information. A detailed configuration and an operation of the display apparatus 100 is described below referring to FIG. 3.

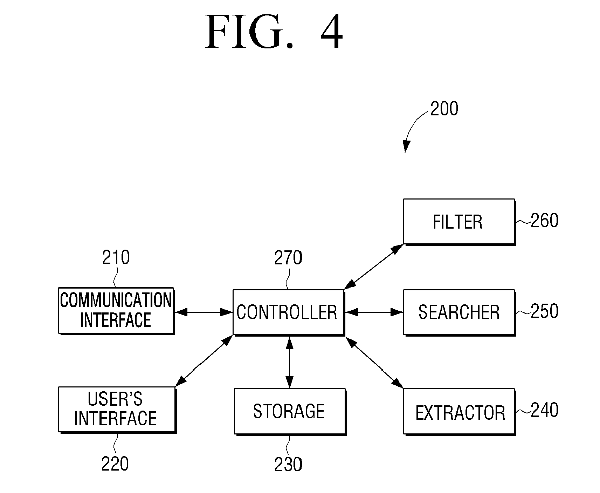

The interactive server 200 receives information corresponding to the user's uttered voice and filtering information from the display apparatus 100, generates response information based on the received information, and transmits the response information to the display apparatus 100. The interactive server 200 may extract a search keyword based on voice information provided from the display apparatus, search a channel based on an extracted search keyword and pre-stored mapping information, filter a channel which is watchable through a display apparatus among the found channels, and transmit the filtered result to the display apparatus 100 as a response information. A detailed configuration and an operation of the display server thereof are described below referring to FIG. 4.

FIG. 1 illustrates the display apparatus which is connected with one interactive server, but the interactive server may be configured as a plurality of servers. Also, FIG. 1 illustrates the interactive server which is connected to one display apparatus, but the interactive server may be connected to a plurality of display apparatuses.

As described above, information corresponding to the uttered voice is processed through the interactive server, and the display apparatus 100 receives the processed result and performs a service corresponding to the user's uttered voice. However, the display apparatus 100 may operate autonomously for an uttered voice. For example, in response to the user's uttered voice which is a volume control command such as "volume up," the display apparatus 100 determines whether control information corresponding to the uttered voice command, "volume up," is pre-stored and may control the volume based on the pre-stored control information.

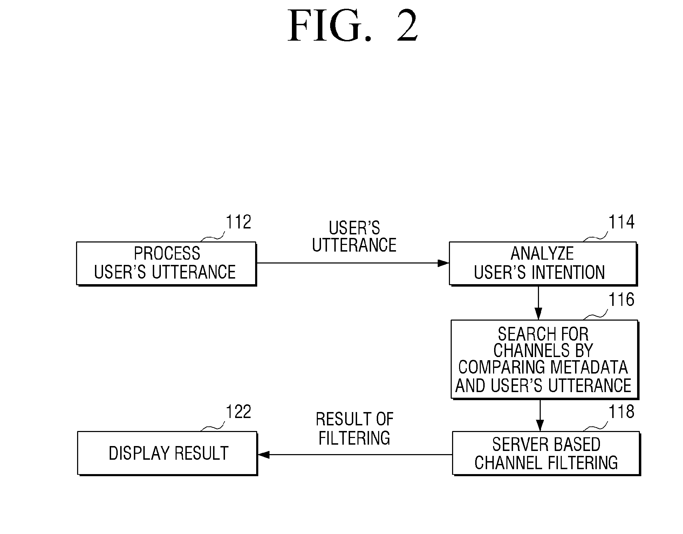

FIG. 2 is a diagram illustrating an operation providing appropriate response information corresponding the user's uttered voice according to an exemplary embodiment.

Referring to FIG. 2, the display apparatus 100 collects user's uttered voice input through a microphone (not illustrated) and performs a signal processing regarding the collected user's uttered voice, in operation 112. To be specific, in response to the input of the user's voice as an analog signal, the display apparatus 100 performs sampling of the input uttered voice and converts the voice to a digital signal. The display apparatus 100 may determine whether the uttered voice which is converted to the digital signal has noise, and the noise may be removed from the converted digital signal, i.e., by a noise removing filter.

In response to the user's uttered voice being processed as the digital signal, the display apparatus 100 transmits the user's uttered voice signal as the digital signal and the filtering information to the interactive server 200. The filtering information is information which notifies the interactive server of the channel information peculiar to the display apparatus 100. The filtering information may be a list of channels to be provided, and may be information which makes the interactive server notice list which includes information such as a country code, a language code, a device model name, a firmware version, a current time of a device, a headend identifier (ID), a device type, a conversation ID of the display apparatus, etc.

The headend is an apparatus which receives and transmits a radio signal or a signal of a program which is produced by a cable TV (CATV).

The display apparatus 100 may encrypt the uttered voice and filtering information by using HTTPS and transmit the encrypted information. For example, the encrypted information may be 'https://XXX.XXX.XXX.XXX/server control command & country information & businessman information & device identification information & user's utterance & TV channel information.'

The interactive server 200 may convert the uttered voice to text information, analyze the text, and extract entity information as a search keyword from the text information, in operation 114.

As described above, the display apparatus 100 transmits the voice signal to the interactive server 200 which converts to voice signal to text. However, the display apparatus 100 may convert the user's voice to text information and may provide the text information as information regarding the uttered voice to the interactive server.

An utterance factor is a user's uttered voice which is classified by a morpheme, and may include an utterance factor regarding a speech act or a dialogue act, an utterance factor regarding a main action, and an utterance factor which shows a component slot (herein below, referred to as entity information). The speech act or the dialogue act is a classification standard which is related to a form of sentence and shows whether the relevant sentence is a statement, a request or a question.

A main action is semantic information showing an action that the relevant utterance indicates through a conversation at a specific domain. For example, at a broadcast service domain, the main action may be a program search, a time for a program, a program reservation, etc. The entity information is information which exteriorizes the meaning of intended action at the specific domain which is shown from the user's utterance. The entity information is the utterance factor which shows a practice object. For example, at the broadcast service domain, the entity information may include a genre, a program name, a time for a program, an actor, a movie genre, etc.

The interactive server 200 searches for a channel based on stored mapping information and an extracted keyword, i.e., maps the extracted keyword to the stored channels or channel information, in operation 116. A channel may be compared and analyzed by using TV channel information (a channel map) which is transmitted at the time of communication. The Advanced Television System Committee (ATSC) method of Korea and US uses a major channel item, a minor channel item and a physical transmission channel (PTC) item of channel map information, and the Digital Video Broadcast (DVB) method of Europe uses original network ID (ONID) item, Transport Stream ID (TSID) item and service ID (SID) item.

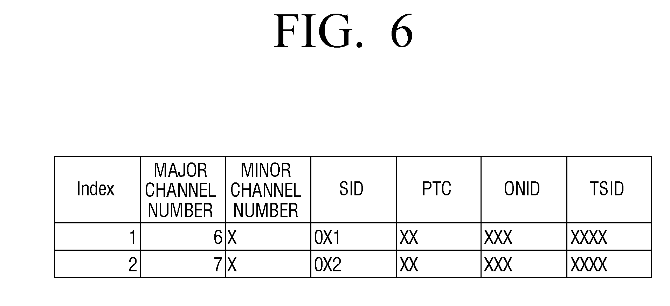

FIG. 6 is an example of a simple format of the pre-stored channel map, according to an exemplary embodiment.

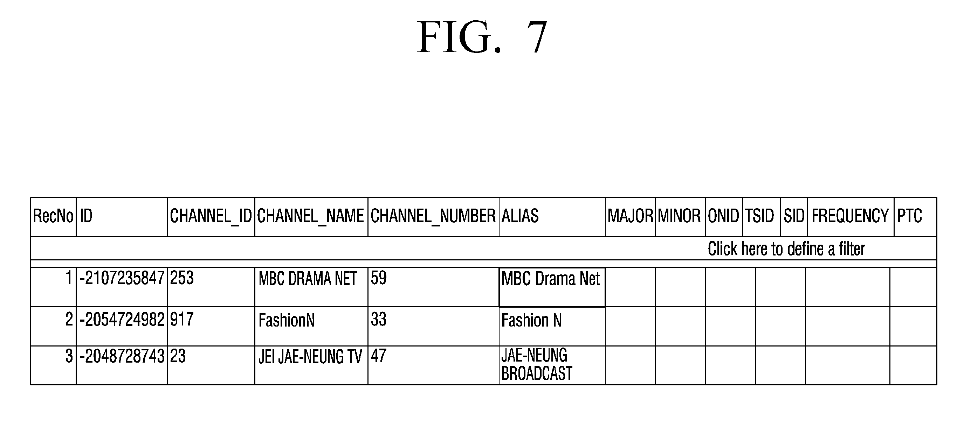

FIG. 7 is a diagram illustrating another example of a channel map, according to an exemplary embodiment.

The interactive server 200 filters the found channels based on the received filtering information, in operation 118. The interactive server 200 may filter out a channel which is not watchable through the display apparatus 100 among the found channels based on the provided filtering information.

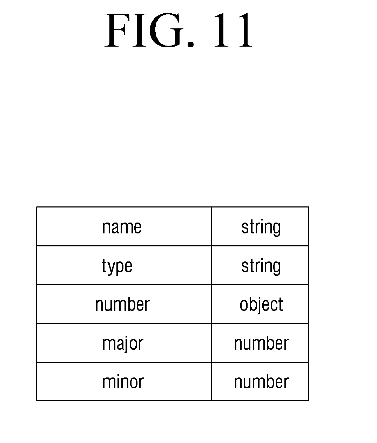

The interactive server 200 transmits at least one watchable channel to the display apparatus 100 as response information obtained as a result of filtering. The interactive server 200 may encrypt the response information by using HTTPS which is the same as the case where information regarding uttered voice is received, and may transmit the response information using the format illustrated in FIG. 11.

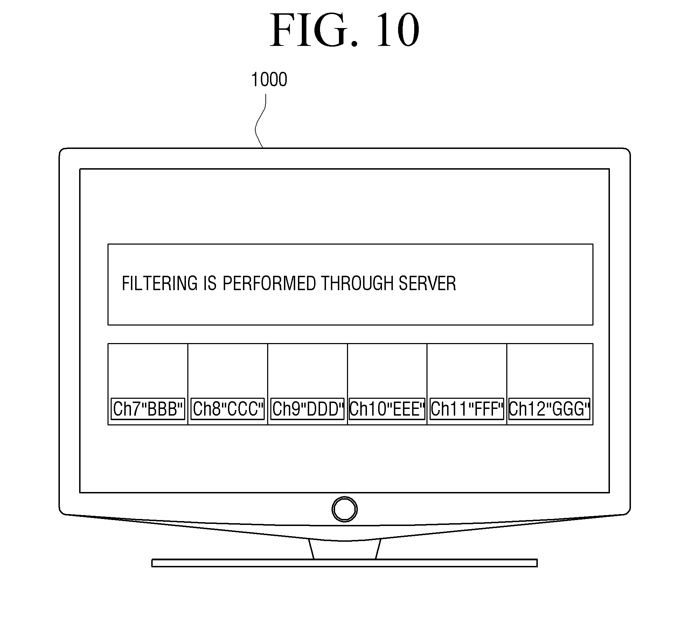

The display apparatus 100 receives the response information and displays the received response information, in operation 122. The display apparatus 100 may display a user's interface window 1000 including response information illustrated in FIG. 10.

The interactive system according to the exemplary embodiment may perform a filtering of channels by the interactive server, and not by the display apparatus as in related art. Thus, reduction of a result corresponding to the uttered voice by the size limitation of the response information may be prevented and the data information size which is transmitted from the interactive server to the display apparatus may be reduced, i.e., limited to only the channels which are watchable through the display apparatus.

FIG. 3 is a diagram illustrating a detailed configuration of the display apparatus of FIG. 1.

As illustrated in FIG. 3, the display apparatus 100 may include a communication interface 110, a display 120, a storage 130, a voice collector 140 and a controller 150. The display apparatus 100 may provide the Internet function, and may include a smart TV, a cell phone such as a smart phone, a desktop PC, a laptop, a navigation device, a set-top box, etc.

The communication interface 110 may connect the display apparatus 100 to the external apparatus (not illustrated) via a Local Area Network (LAN), Internet network, and a radio communication network, as for example, a Bluetooth, Global Standard for Mobile Communication (GSM), Universal Mobile Telephone System (UMTS), Long Term Evolution (LTE), Wireless Broadband Internet (WiBro), etc.

An image signal is input to the communication interface 110. The communication interface 110 may receive the image signal from an external image providing apparatus, as for example, a set-top box, etc., or an antenna. The image signal may be a broadcast signal transmitted from a broadcast company or a satellite by a cable or radio, an image content which is transmitted from a DVD player, a Blu-ray player through a High Definition Multimedia Interface (HDMI) cable, an audio/video (AV) terminal, etc., and an image content which is transmitted from a cell phone, a computer, etc. through a USB terminal.

The communication interface 110 performs a communication with the interactive server 200 which provides response information corresponding to the user's uttered voice. The communication interface 110 may perform a communication with an interactive server 200 according to a various communication ways, and may transmit information corresponding to the user's uttered voice and filtering information to the interactive server 200. In implementation, the communication interface 110 may transmit a voice itself which is a digitally processed voice to the interactive server and/or may transmit voice information which is converted to a text. When the communication interface 110 transmits the above information, the information may be encrypted and transmitted.

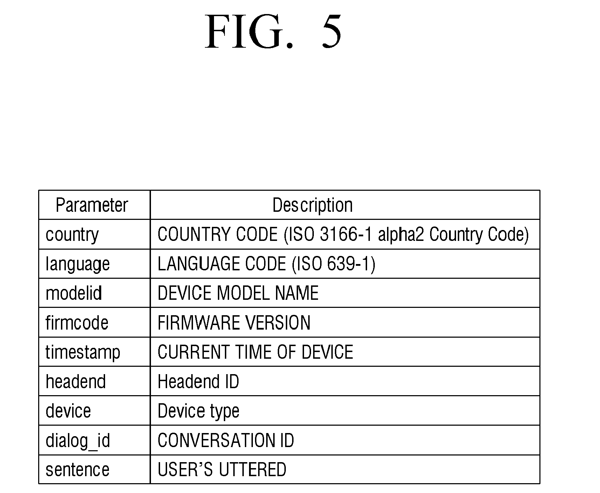

For example, as illustrated in FIG. 5, information regarding the uttered voice and filtering information may be transmitted in a JavaScript Object Notation (Json) data format which uses human-readable text for describing information when the information is exchanged.

The communication interface 100 may receive response information from the interactive server 200. The received information may be encrypted information, and may have a format illustrated in FIG. 11.

The display 120 may display information provided to the display apparatus 100. The display 120 may be an apparatus which serves as an input and an output, such as a touch screen, etc., and may be an image display apparatus such as a Liquid Crystal Display (LCD), a Plasma Display Panel (PDP), Cathode Ray Tube (CRT), etc. The touch screen may form a mutual layer structure with a touch pad, and may extract a touch input location, an area and a pressure of a touch input.

The display 120 may display a response message corresponding to the user's uttered voice as text or image. The display 120 may display response information which is provided from the interactive server 200 on a user's interface window including the response information as illustrated in FIG. 10.

The display 120 may display channel content corresponding to a user's channel selection.

The storage 130 may store contents corresponding to various services which are provided by the display apparatus 100. The storage 130 may store collected voice contents which are collected by the voice collector 140 described below.

The storage 130 stores a program for driving the display apparatus 100. The storage 130 may store a program which is a collection of various commands needed for the drive of the display apparatus 100. The program may include an application for providing specific service and/or an operation program for driving the application.

The storage 130 may be implemented as a storage medium in the display apparatus 100 and an external storage medium, for example, a removable disk including a USB memory, a storage medium connected to a separate host, a web server through a network, etc.

The voice collector 140 collects the user's uttered voice through a microphone (not illustrated) and performs a signal processing regarding a collected user's uttered voice. To be specific, in response to the input of the user's voice as an analog signal, the voice collector 140 performs a sampling of the input uttered voice and converts the input uttered voice to a digital signal. The voice collector 140 determines whether noise exists in the uttered voice which is converted to a digital signal, and removes the noise from the converted digital signal.

The voice collector 140 may convert the collected uttered voice signal to text information, by using, for example, a Speech to Text (STT) algorithm known to those skilled in the art.

The controller 150 controls each element of the display apparatus 100. To be specific, in response to the user's utterance being collected through the voice collector 140, the communication interface 110 may be controlled to receive response information corresponding to the collected utterance and to transmit information corresponding to the user's utterance and filtering information to the interactive server 200. In response to response information being received, the controller 150 may control the display 120 directly to display the received response information without an additional filtering operation.

The display apparatus 100 according to the exemplary embodiment displays the received response information without an additional filtering operation by the display apparatus 100 as in the related art, and, thus, a result corresponding to the user's uttered voice may be displayed promptly. Additionally, the display apparatus 100 may display the result corresponding to the user's uttered voice so that the displayed response is not affected by a size limitation imposed by a server, since the server filters out the channels which are not watchable on the display apparatus 100 and, thus, a greater number of watchable channels can be provided to the user.

FIG. 4 is a diagram illustrating a detailed configuration of the interactive server illustrated in FIG. 1.

Referring to FIG. 4, the interactive server 200 according to the exemplary embodiment includes a communication interface 210, a user's interface 220, a storage 230, an extractor 240, a searcher 250, a filter 260 and a controller 270.

The communication interface 210 may connect the interactive server 200 to the external apparatus (not illustrated) and may be accessed to the external apparatus through a local area network, Internet network, and/or a radio communication network, as for example, a Bluetooth, GSM, UMTS, LTE, WiBRO, etc.

The communication interface 210 may perform a communication with the display apparatus 100 according to various communication methods and may receive information corresponding to the user's uttered voice and filtering information from the display apparatus 100. The information corresponding to the received uttered voice may be a voice content itself, and/or may be information converted to text.

The communication interface 210 transmits response information corresponding to a filtering result of the filter 260 described below. The communication interface 210 may transmit response information, as described above, in a format illustrated in FIG. 11. The communication interface 210 may encrypt the response information and transmit the encrypted information.

The user interface 220 may include various function keys through which a user may set or select various functions supported by the interactive server 200 and may display various information provided from the interactive server 200. The user interface 220 may include an apparatus which serves as an input and an output, such as a touch screen, and/or may be implemented by a combination of an input apparatus such as a keyboard which performs an input operation and a display apparatus which performs an output operation.

The storage 230 may store the transmitted information, the mapping information, a search result of the searcher, and/or a filtering result of the filter 260.

The mapping information may be a keyword corresponding to broadcast information or may be the broadcast information corresponding to a keyword.

The storage 230 may be implemented as a storage medium in the interactive server 200 and/or an external storage medium such as a removable disk including a USB memory, a storage medium connected to a separate host, a web server connected through a network, etc.

The extractor 240 extracts a search keyword from information corresponding to the received user's uttered voice as described above with reference to FIGS. 1 and 2.

For example, in response to a uttered voice or a text, "show ○○○ (program name)", requesting to watch a specific program being provided, the extractor 240 may extract "○○○ (program name)" as a keyword.

The searcher 250 searches a channel based on pre-stored mapping information and an extracted keyword, as described above with reference to FIG. 2.

For example, in response to an uttered voice or text, "show ○○○ (program name)", requesting to watch a specific program being provided, the searcher 250 may search a channel having the program entitled "○○○" from EPG metadata.

The filter 260 filters the found channels based on the received filtering information. The filter 260 may filter a channel which is not watchable through the display apparatus 100 among the found channels based on the provided filtering information.

The controller 270 controls elements of the interactive server 200. To be specific, in response to information regarding uttered voice and filtering information being received through the communication interface 210, the extractor 240 and the searcher 250 are controlled to extract channels corresponding to information regarding the received uttered voice, and the filter 260 may be controlled to perform a filtering regarding the search result. The controller 270 may control the communication interface 210 to provide the filtered result as response information to the display apparatus 100.

As described above, the interactive server 200 according to an exemplary embodiment performs filtering of the found channels based on the provided filtering information, and, thus, unnecessary information, as for example, a channel which corresponds to a search word but is not watchable through the display apparatus 100, is not transmitted to the display apparatus 100. Therefore, the size of response information provided to the display apparatus 100 may be reduced.

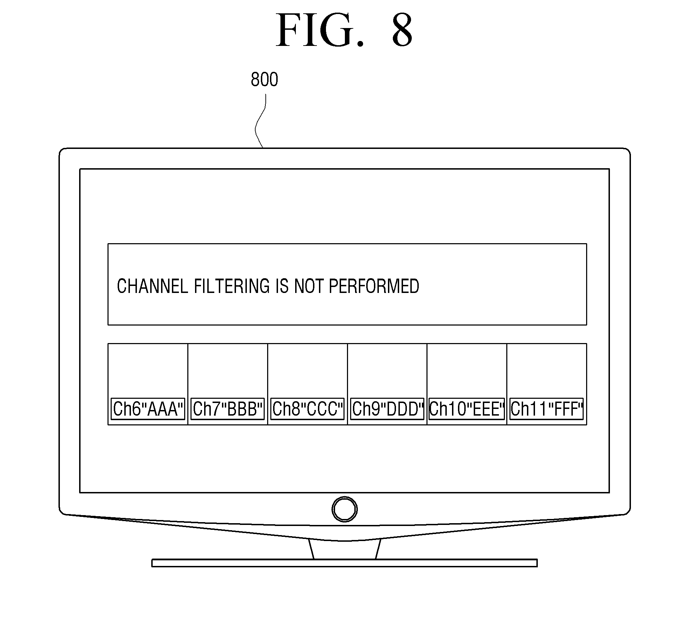

FIGS. 8 to 10 are diagrams illustrating an example of a user's interface window which may be displayed through a display apparatus.

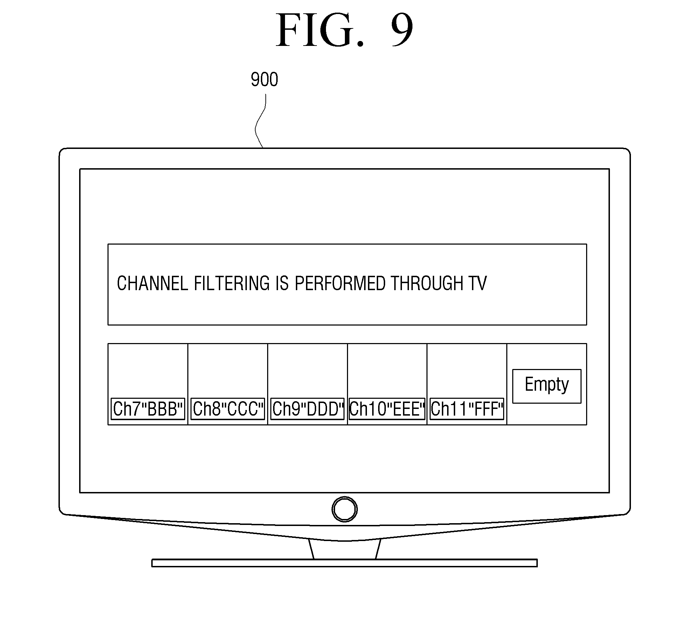

FIG. 8 is an example of response information which may be displayed in response to the channel filtering not being performed, FIG. 9 is an example of response information which may be displayed in response to the channel filtering being performed through the display apparatus, and FIG. 10 is an example of response information displayed in response to the channel filtering being performed through the interactive server.

It is supposed that seven channels (channels 6, 7, 8, 9, 10, 11 and 12) are found, one of the channels (channel 6) is a channel which cannot be displayed through the display apparatus, and the number of channel information items or channels which the interactive server may provide to the display apparatus is six.

Referring to FIG. 8, since the channel filtering is not performed, the interactive server provides six channels (channels 6, 7, 8, 9, 10, 11) among seven found channels (channels 6, 7, 8, 9, 10, 11, 12) in random order as the response information. The display apparatus displays the provided six channels to the user, on a screen 800. In response to the display apparatus displaying channels including a channel which cannot be watched on the display apparatus and the user selecting the corresponding channel (channel 6), an error will occur in the display apparatus.

Referring to FIG. 9, an operation of the interactive server is the same as FIG. 8 because the channel filtering is performed through the display apparatus. Therefore, the interactive server provides six channels (channels 6, 7, 8, 9, 10, 11) among seven found channels (channels 6, 7, 8, 9, 10, 11, 12) in random order as the response information. The display apparatus filters out, i.e., eliminates from the received channel list, a channel (channel 6) which cannot be provided through the display apparatus among the provided six channels (channels 6, 7, 8, 9, 10, 11). As a result of a local filtering by the display apparatus, only five channels (channels 7, 8, 9, 10, 11) may be displayed to the user on a screen 900.

Referring to FIG. 10, the interactive server filters a channel (channel 6) which cannot be provided through the display apparatus among the found seven channels (channels 6, 7, 8, 9, 10, 11, 12) and may provide remaining channels (channels 7, 8, 9, 10, 11, 12) to the display apparatus as response information. The display apparatus displays a channel according to the provided response information, on a screen 1000. Because the channel filtering has been performed through the interactive server, a number of channel information items or a number of watchable channels provided to the user is increased.

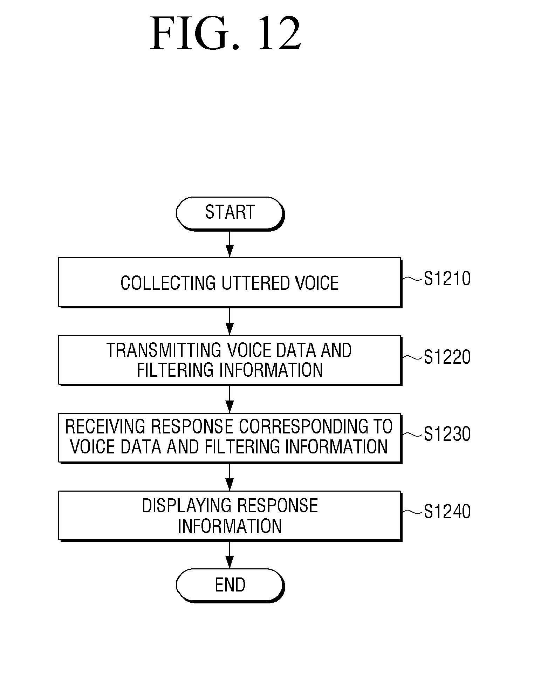

FIG. 12 is a flowchart describing a method of providing response information from the display apparatus according to an exemplary embodiment.

Referring to FIG. 12, the display apparatus according to an exemplary embodiment collects the user's uttered voice (operation S1210). The display apparatus collects the input user's uttered voice through a microphone and performs a signal processing regarding the collected user's uttered voice. The signal processing may include converting a voice signal to text.

The collected voice and filtering information of the display apparatus may be encrypted and provided to the interactive server (operation S1220).

The response information corresponding to the uttered voice and filtering information is received (operation S1230). The received response information includes only the information on the channels which are watchable on the display apparatus.

The received response information is displayed (operation S1240). To be specific, channel information corresponding to the received response information may be displayed in a list. In response to one of the displayed channel information items being selected, an image corresponding to the selected channel may be displayed.

As described above, a method of providing response information to the display apparatus according to an exemplary embodiment displays the received response information without a separate local filtering operation by the display apparatus 100, and, thus, a result corresponding to the user's uttered voice may be displayed quickly. Additionally, a result corresponding to the user's uttered voice may be displayed without a reduction by a size limitation of the response information. The method of providing response information illustrated in FIG. 12 may be executed by a display apparatus having a configuration of FIG. 3, and also may be executed by a display apparatus having other configuration.

The method of providing response information described above may be implemented as a program including algorithm to be executed on a computer, and the program may be stored in the non-transitory computer-readable medium.

The non-transitory computer-readable medium is a medium which stores a data semi-permanently and is readable by an apparatus, not a media which stores a data for a short period such as a register, a cache, a memory, etc. Specifically, a CD, a DVD, a hard disk, a blu-ray disk, a USB, a memory card and Read-Only Memory (ROM) may be the non-transitory computer-readable medium.

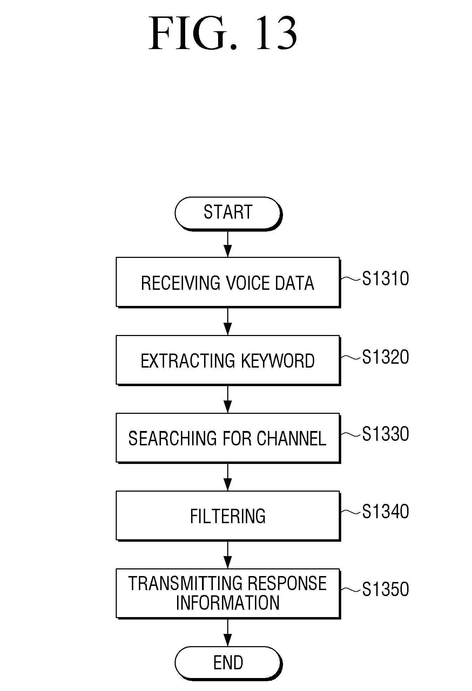

FIG. 13 is a flowchart describing a method of providing response information of the interactive server according to an exemplary embodiment.

Referring to FIG. 13, the interactive server receives encrypted information corresponding to the user's uttered voice and encrypted filtering information, from the display apparatus (operation S1310).

The interactive server may extract information corresponding to the received user's uttered voice (operation S1320). To be specific, in response to the provided information being the uttered voice itself, the interactive server may convert the received voice to text information and may extract entity information as a keyword from the converted text information. Since the provided information is text information, the entity information may be extracted as a keyword from the received text information immediately.

The interactive server searches for at least one channel based on pre-stored mapping information and an extracted keyword (operation S1330). Detailed explanation is omitted because searching a channel with an extracted keyword is a technology known to those skilled in the art.

The interactive server filters the found channels based on the received filtering information (operation S1340). The interactive server may filter out a channel which is not watchable through the display apparatus 100 among the found channels based on the received filtering information.

The interactive server transmits the filtered result to the display apparatus (operation S1350). The interactive server may generate the filtering result as response information having the same format as FIG. 11, and may transmit the generated response information to the display apparatus. The interactive server may encrypt response information and transmit the encrypted information to the display apparatus.

As described above, a method of providing response information of the interactive server according to an exemplary embodiment performs a filtering of the channels found by the interactive server 200 based on the provided filtering information, so that the unnecessary information, for example, a channel which corresponds to a search word but is not watchable through the display apparatus 100, is not provided to the display apparatus 100. A method of providing response information as FIG. 13 may be executed on the interactive server having a configuration illustrated in FIG. 4, and also may be executed on other interactive servers having other configuration.

A method of providing response information as illustrated above may be implemented as a program including algorithm to be executed on a computer, and the program may be stored in the non-transitory computer-readable medium described above.

The foregoing exemplary embodiments and advantages are merely exemplary and are not to be construed as limiting. The present teaching can be readily applied to other types of apparatuses. The description of the exemplary embodiments is intended to be illustrative, and not to limit the scope of the claims, and many alternatives, modifications, and variations will be apparent to those skilled in the art. For example, each single component may be separated into multiple components which are then separately implemented. Also, separated components may be combined together and implemented as a single component.

## Claims

1. A display apparatus (100) comprising:
a display (120) configured to display contents;
a voice collector (140) configured to collect a user's uttered voice;
a communication interface (110) configured to provide the collected user's uttered voice and filtering information of the display apparatus to an interactive server (200); and
a controller (150) configured to receive, from the interactive server, response information corresponding to the user's uttered voice and to the filtering information, and to control the display to display the response information.

2. The display apparatus (100) as claimed in claim 1, wherein the voice (140) collector is further configured to convert a signal corresponding to the collected user's uttered voice to text information.

3. The display apparatus (100) as claimed in claim 1 or claim 2, wherein the filtering information includes at least one of a country code, a language code, a device model name, a firmware version, a current time of a device, a headend identifier (ID), an apparatus type, a conversation ID, and channel information of the display apparatus.

4. The display apparatus (100) as claimed in any one of claims 1 to 3, wherein the communication interface (110) is further configured to encrypt the user's uttered voice and the filtering information and provide the encrypted information to the interactive server (200).

5. The display apparatus as claimed in any one of claims 1 to 4, wherein the response information includes only information about channels watchable through the display apparatus.

6. The display apparatus (100) as claimed in any one of claims 1 to 5, wherein the display is further configured to display channel information items corresponding to the response information in a list.

7. The display apparatus (100) as claimed in claim 6, wherein, in response to one of the displayed channel information items being selected from the list, the controller (150) is further configured to control the display to display content of a channel corresponding to the selected channel information item.

8. An interactive server (200) comprising a processor which comprises:
a communication interface (210) configured to receive information corresponding to a user's uttered voice and filtering information from a display apparatus (100);
an extractor (240) configured to extract a search keyword from information corresponding to the received user's uttered voice;
a searcher (260) configured to search for channels based on pre-stored mapping information and the extracted keyword and provide a search result;
a filter (260) configured to filter channels, provided in the search result, based on the received filtering information; and
a controller (270) configured to control the communication interface to transmit a filtered result to the display apparatus.

9. The interactive server (200) as claimed in claim 8, wherein information corresponding to the user's uttered voice is text information, and
the extractor (240) is further configured to extract entity information as the keyword, from the text information.

10. The interactive server (200) as claimed in claim 8, wherein the filter (260) is further configured to filter out at least one channel which is not watchable through the display apparatus (100), among the found channels.

11. A method comprising:
collecting a user's uttered voice;
providing the collected user's uttered voice and filtering information of a display apparatus (100) to an interactive server (200);
receiving response information corresponding to the user's uttered voice and to the filtering information; and
displaying the received response information on the display apparatus.

12. The method as claimed in claim 11, wherein the collecting comprises converting a signal corresponding to the collected user's uttered voice to text information.

13. The method as claimed in claim 11 or claim 12, wherein the filtering information includes at least one of a country code, a language code, a device model name, a firmware version, a current time of a device, a headend identifier (ID), an apparatus type, a conversation ID, and channel information of the display apparatus (100).

14. A method of an interactive server comprising a processor executing the method, which comprises:
receiving information corresponding to a user's uttered voice and filtering information, from a display apparatus (100);
extracting a search keyword from information corresponding to the received user's uttered voice;
searching for channels based on pre-stored mapping information and the extracted keyword;
filtering channels, which have been found in response to the searching, based on the received filtering information; and
transmitting a filtered result to the display apparatus.

15. A system comprising a display apparatus (100) according to any one of the claims 1-7 and an interactive server according to any one of claims 8-10.
